# DEMANDE DE BREVET EUROPEEN

(11) **EP 0 801 238 A1**
(43) Date de publication de la demande: **15.10.1997**
(21) Numéro de dépôt: 97420059.4
(22) Date de dépôt: 09.04.1997
(51) Int. Cl.: F16C 11/06

(54) **Embout verrouillable pour élément d'accouplement**

(30) Priorité: 10.04.1996 FR 9604771
(71) Demandeur: ADWEST OCI SA, 42350 La Talaudière (FR)
(72) Inventeur: Gaillard, Jean, 42100 Saint Etienne (FR)
(74) Mandataire: Thivillier, Patrick

(57) **Abrégé**

L'embout verrouillable pour élément d'accouplement comprend une tête (2) avec une empreinte en creux (2a) de forme générale hémisphérique et présentant radialement des agencements de retenue d'une partie complémentaire sous forme d'une rotule (3), et aptes à être déformés élastiquement sous un effort d'introduction de ladite rotule, lesdits agencements coopérant avec des moyens de verrouillage aptes à permettre l'expansion diamétrale ou non de l'empreinte en fonction de leur positionnement. L'empreinte (2a) est formée à l'intérieur de la tête, à partir d'un corps cylindrique (2d) délimitant un espace annulaire (2b) pour le montage des moyens de verrouillage, sous forme d'un organe poussoir (4) avec capacité de déplacement guidé, ledit organe (4) présentant des agencements destinés à coopérer ou non avec les agencements (2c) de la tête pour permettre l'expansion diamétrale ou non de l'empreinte en fonction du positionnement dudit organe.

## Description

L'invention se rattache au secteur technique de l'automobile notamment.

L'invention concerne plus particulièrement et non limitativement des biellettes d'accouplement destinées à être montées en bout de l'arbre de commande de sélection et/ou de passage de la boite de vitesses.

D'une manière générale, ce type de biellette est constitué par une tige métallique dont l'une des extrémités au moins est solidaire de l'embout comprenant une tête avec une empreinte en creux de forme générale hémisphérique, destinée à recevoir une partie complémentaire sous forme d'une rotule.

Plus spécialement, le problème que se propose de résoudre l'invention est d'assurer le verrouillage de la rotule dans la cavité hémisphérique de la tête. On connait plusieurs solutions techniques permettant d'assurer cette fonction.

Par exemple, l'empreinte hémisphérique peut être formée dans une tête fendue radialement pour permettre l'expansion diamétrale de la cage lors de l'effort de l'introduction de la rotule. Un moyen de verrouillage, solidaire d'une partie de l'embout, coopère par des agencements de clipage avec une partie complémentaire que présente la tête afin d'interdire toute expansion diamétrale de cette dernière. On conçoit que cette opération de verrouillage n'est pas automatique lors de l'introduction de la rotule et constitue une opération volontaire. On ne peut donc exclure le fait qu'après introduction de la rotule, dans la cage hémisphérique de la tête, l'opérateur oublie accidentellement de verrouiller ladite tête. Un exemple de ce type de réalisation peut être illustré par l'enseignement du brevet FR2304818.

Pour remédier à ces inconvénients, on a proposé une solution apte à assurer de manière automatique et concomitante le déverrouillage de l'embout, la mise en place de la rotule et le verrouillage de la rotule à l'intérieur de la cage hémisphérique de l'embout, en respectant de manière immuable l'ordre précité. Cette solution ressort de l'enseignement de la demande de brevet FR-A-9512198.

Pour l'essentiel, cette demande de brevet revendique un embout qui présente au moins une partie de verrouillage déformable élastiquement, coopérant en permanence avec des agencements complémentaires de la tête aptes à permettre l'expansion diamétrale ou non de l'empreinte en fonction du positionnement de la partie de verrouillage, pour permettre sous un effort de poussée sur ladite partie, de libérer lesdits agencements et autoriser, d'une manière concomitante, une expansion diamétrale de l'empreinte sous un effort d'introduction de la rotule, et, sous un effort de relâchement de ladite partie, le blocage desdits agencements et, d'une manière concomitante, le verrouillage de la rotule.

Cette solution donne parfaitement satisfaction au niveau de la fonction du verrouillage dans les conditions précitées. Toutefois, une telle solution nécessite un embout de forme spéciale au niveau notamment de sa tête compte tenu des moyens de verrouillage sous forme d'un nez fendu formé en débordement de la tête et aptes à être engagés dans une ouverture profilée de la partie de verrouillage. Cette conception particulière de la tête exclut de l'utiliser en combinaison avec des bagues élastiques couramment utilisées pour assurer la filtration des vibrations.

L'invention s'est fixée pour but de remédier à ces inconvénients de manière simple, sûre, efficace et rationnelle.

Le problème que se propose de résoudre l'invention est d'assurer de manière automatique et concomitante le déverrouillage de la tête, puis la mise en place de la rotule, et enfin le verrouillage de cette dernière à l'intérieur de l'empreinte hémisphérique de la tête, avec la possibilité de monter la tête en combinaison avec une bague de filtration.

Pour résoudre un tel problème, il a été conçu et mis au point un embout conforme aux caractéristiques de la revendication 1.

Pour résoudre le problème posé d'assurer le verrouillage de l'empreinte, les agencements de l'empreinte sont constitués par des pattes déformables élastiquement et inscrites dans l'espace annulaire de la tête, la base desdites pattes présentant un profil interne de retenue.

Pour résoudre le problème posé de permettre l'expansion diamétrale de la tête ou bien son verrouillage en fonction du positionnement de l'organe poussoir, les agencements de l'organe poussoir sont constitués par des pattes déformables élastiquement, disposées en correspondance avec celles de l'empreinte, la base desdites pattes présentant un profil externe apte à coopérer avec l'espace annulaire de la tête correspondant au blocage desdites pattes de l'empreinte, ledit profil étant prolongé par un évidement pour permettre l'expansion diamétrale de l'organe en position de dégagement correspondant au déverrouillage pour l'introduction de la rotule.

Suivant d'autres caractéristiques :
- la tête et l'organe poussoir présentent en combinaison des moyens complémentaires de guidage et d'indexation ;
- l'organe présente au niveau de l'extrémité ouverte des pattes un bourrelet de retenue coopérant avec le bord circulaire de la tête en position de verrouillage ;
- le moyen élastique est un ressort monté dans le fond de l'organe poussoir en appui sur la tête.

Pour résoudre le problème posé de combiner la tête avec une bague de filtration, la tête est réalisée à partir d'un corps cylindrique et est montée concentriquement dans une bague élastique filtrante elle-même solidaire d'une douille en matériau rigide.

L'invention est exposée ci-après plus en détail à l'aide des figures et dessins annexés dans lesquels :
- la figure 1 est une vue en perspective avant montage des principaux éléments de l'embout selon l'invention ;
- la figure 2 est une vue en perspective de l'embout considéré en vue de dessous après introduction de l'organe poussoir ;
- la figure 3 est une vue semblable à la figure 2 considérée en vue de dessus ;
- la figure 4 est une vue en coupe de l'embout avant introduction de la rotule ;
- la figure 5 est une vue semblable à la figure 4 montrant l'introduction de la rotule ;
- la figure 6 est une vue semblable à la figure 4 après introduction et verrouillage de la rotule ;
- la figure 7 est une vue en coupe longitudinale de l'embout montrant le montage de la tête dans une bague de filtration ;
- la figure 8 est une vue en plan et en coupe considérée selon la ligne 8-8 de la figure 7.

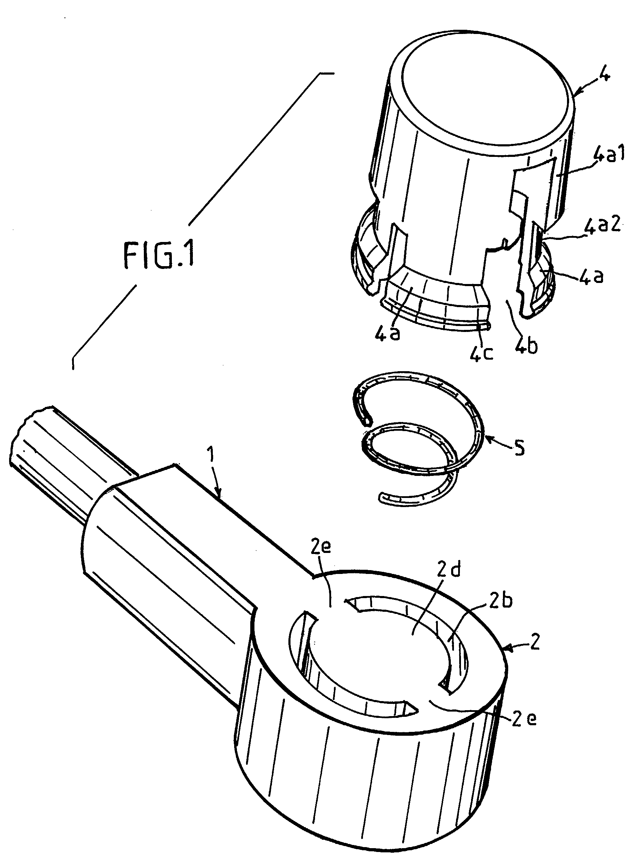

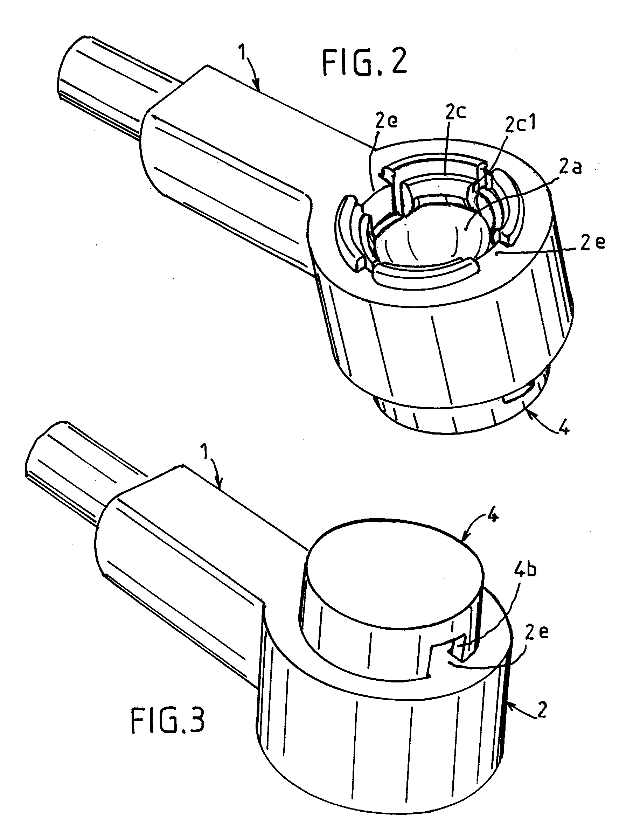

Comme le montrent notamment les figures 1, 2 et 4, l'embout présente de manière connue un corps (1) prolongé à l'une de ses extrémités par une tête (2) présentant une empreinte en creux (2a) de forme générale hémisphérique. L'empreinte (2a) permet le montage, de manière multidirectionnelle, d'une partie complémentaire de l'accouplement à réaliser sous forme d'une rotule (3). L'empreinte (2a) constitue une cage pour la libre articulation de la rotule (3).

Selon une caractéristique importante de l'invention, l'empreinte (2a) présente radialement des agencements de retenue (2c) de la rotule (3) qui sont aptes à être déformés élastiquement au moment de l'introduction de ladite rotule (3). L'empreinte (2a) est formée à l'intérieur de la tête (2) en délimitant un espace annulaire (2b) pour le montage d'un organe poussoir (4).

Autrement dit, l'empreinte est formée à partir d'un corps cylindrique (2d) rendu solidaire, par tout moyen connu et approprié, et d'une manière concentrique, d'un alésage circulaire que présente la tête.

L'organe poussoir (4) est monté dans l'espace annulaire (2b) avec capacité de déplacement guidé et présente des agencements destinés à coopérer ou non avec les agencements de la tête (2) pour permettre l'expansion diamétrale ou non de l'empreinte (2a) en fonction de son positionnement.

Les agencements de l'empreinte (2a) sont constitués par des pattes (2c) formées selon les génératrices du corps (2d). Les pattes sont déformables élastiquement et inscrites dans l'espace annulaire (2b) de la tête. Par exemple, la tête (2) présente quatre pattes (2c) séparées par des échancrures (2cl). La base de chacune des pattes présente un profil interne de retenue (2c2) déterminé pour assurer la retenue de la rotule (3).

On rappelle que l'espace annulaire (2b) résulte de la différence de diamètre des formes géométriques de l'alésage interne circulaire de la tête et du diamètre externe du corps cylindrique à partir duquel est formée l'empreinte (2a) avec les pattes (2c).

L'organe poussoir (4) est formé par un corps creux de forme générale cylindrique présentant des pattes (4a) déformables élastiquement et disposées, après introduction dans l'espace annulaire (2b), en correspondance avec les pattes (2c) de l'empreinte (2a). La base des pattes (4a) présente un profil externe (4al) apte à coopérer avec l'espace annulaire (2b) correspondant, comme il sera indiqué dans la suite de la description, au blocage des pattes (2c) de l'empreinte. Le profil (4a1) est prolongé par un évidement (4a2) pour permettre l'expansion diamétrale des pattes (4a) en position de dégagement dudit profil correspondant au déverrouillage pour l'introduction de la rotule.

La tête (2) et l'organe poussoir (4) présentent des moyens complémentaires de guidage et d'indexation. Par exemple, la tête peut présenter deux bossages (2e) diamétralement opposés et formés dans l'espace annulaire sur la totalité de la hauteur de la tête. Ces deux bossages coopérent avec deux lumières (4b) diamétralement opposées et formées selon les génératrices de l'organe poussoir (4). L'organe poussoir est monté dans l'espace annulaire (2b) de la tête (2) avec capacité de déplacement à l'encontre d'un ressort de rappel (5). Ce ressort (5) est monté dans le fond de l'organe poussoir (4) en appui sur la tête (2).

On explique ci-après le verrouillage de l'embout selon les caractéristiques de l'invention.

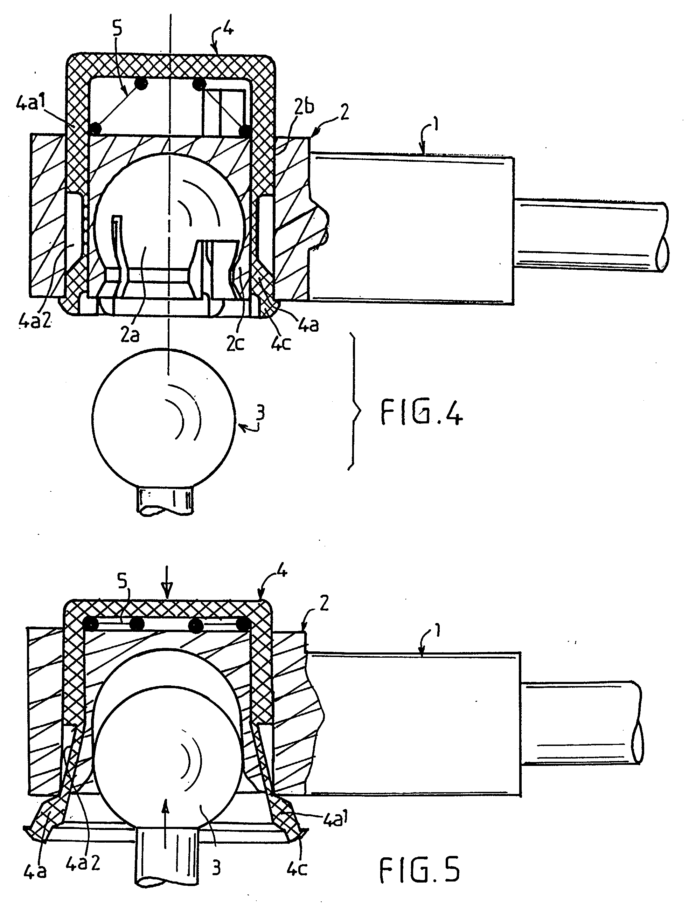

A la figure 4, l'embout est illustré avant introduction de la rotule (3) dans l'empreinte (2a) de la tête (2). Dans cette position, aucun effort n'est exercé sur l'organe de verrouillage (4) de sorte que le profil externe (4a) est positionné dans l'espace annulaire (2b) interdisant toute expansion diamétrale des pattes (2c) de la cage hémisphérique (2a). L'organe poussoir est maintenu dans sa position par le ressort de rappel (5). A noter que l'extrémité des pattes (4a) présente un bourrelet de retenue (4c) coopérant avec le bord circulaire de la tête (2).

Pour permettre l'introduction de la rotule (3) dans la cage hémisphérique (2a), il suffit d'exercer un effort d'appui sur l'organe poussoir (4) pour permettre au profil (4al) d'échapper à l'espace annulaire (2b). Dans cette position, les évidements (4a2) sont disposés en débordement de la tête pour permettre l'expansion de l'ouverture de l'empreinte ou cage hémisphérique (2a). En effet, dans cette position, lors de l'introduction de la rotule (3) dans la cage hémisphérique (2a), les pattes (2c) et (4a) peuvent s'écarter pour permettre l'introduction de la rotule (2) dans la cage hémisphérique (2a) (figure 5).

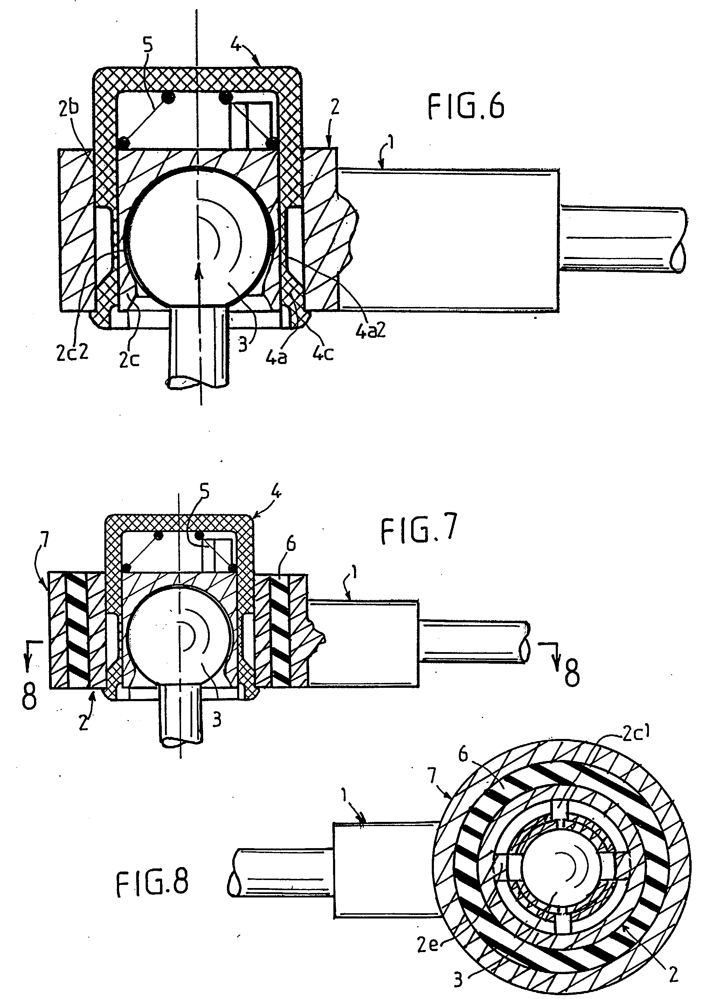

Il suffit ensuite de relâcher la pression exercée sur le poussoir (4) pour que ce dernier revienne automatiquement, sous l'effet de la détente du ressort (5), dans la position initiale de verrouillage (figure 6). Dans cette position, il est impossible d'extraire la rotule (3) étant donné que l'organe poussoir de verrouillage (4) interdit toute expansion des pattes de l'empreinte hémisphérique, même si l'on exerce un effort important de traction au niveau de la rotule (3). En effet, les pattes (2c) sont bloquées par les pattes (4a) du poussoir (4). Pour permettre l'extraction de la rotule, il est nécessaire d'appuyer sur l'organe poussoir pour se replacer dans la position illustrée à la figure 5.

Il en résulte que la mise en place de la rotule dans la cage est impossible tant que l'organe poussoir n'est pas enfoncé tandis que le verrouillage est systématique après introduction de la rotule, c'est-à-dire relâchement de l'organe poussoir (4).

Compte tenu des moyens et agencements de verrouillage dans les conditions indiquées, il est possible de réaliser une tête (2) de forme générale cylindrique. Ces dispositions s'avèrent particulièrement importantes étant donné qu'il est possible de monter la tête (2) d'une manière concentrique à une bague de filtration (6) de tout type connu et approprié. Généralement, la bague de filtration (6) est constituée par une bague en matière élastique apte à absorber les vibrations, cette bague étant rendue solidaire de l'alésage d'une douille (7) en matériau rigide (figures 7 et 8).

Les avantages ressortent bien de la description. En particulier, on souligne et on rappelle :
- le faible effort d'introduction pour la mise en place de la rotule
- le verrouillage positif pour l'extraction,
- la possibilité de combiner la tête avec tout système de filtration connu.

## Revendications

1. Embout verrouillable pour élément d'accouplement comprenant une tête (2) avec une empreinte en creux (2a) de forme générale hémisphérique et présentant radialement des agencements de retenue (2c) d'une partie complémentaire sous forme d'une rotule (3), et aptes à être déformés élastiquement sous un effort d'introduction de ladite rotule, lesdits agencements coopérant avec des moyens de verrouillage aptes à permettre l'expansion diamétrale ou non de l'empreinte en fonction de leur positionnement, **caractérisé en ce que :**
- l'empreinte (2a) est formée à l'intérieur de la tête, à partir d'un corps cylindrique (2d) délimitant un espace annulaire (2b),
- l'espace annulaire (2b) reçoit avec capacité de déplacement guidé, un organe poussoir (4),
- l'organe poussoir présente des agencements destinés à coopérer ou non avec les agencements (2c) de l'empreinte,
- l'organe (4) est monté avec capacité de déplacement à l'encontre d'un moyen élastique (5) pour permettre sous un effort de poussée, de libérer les agencements de verrouillage (2c) et autoriser, d'une manière concomitante, l'expansion diamétrale de l'empreinte sous l'effort d'introduction de la rotule (3) et, après relâchement dudit organe (4), le blocage automatique desdits agencements (2c) pour provoquer, d'une manière concomitante, le verrouillage de la rotule (3).

2. Embout verrouillable selon la revendication 1, caractérisé en ce que les agencements de l'empreinte sont constitués par des pattes (2a) déformables élastiquement et inscrites dans l'espace annulaire (2b) de la tête, la base desdites pattes (2c) présentant un profil interne de retenue.

3. Embout verrouillable selon l'une quelconque des revendications 1 et 2, caractérisé en ce que les agencements de l'organe poussoir (4) sont constitués par des pattes déformables élastiquement (4a), disposées en correspondance avec celles (2c) de l'empreinte (2a), la base desdites pattes (4a) présentant un profil externe (4al) apte à coopérer avec l'espace annulaire de la tête correspondant au blocage des pattes (2c) de l'empreinte, ledit profil (4al) étant prolongé par un évidement (4a2) pour permettre l'expansion diamétrale des pattes (4a) de l'organe en position de dégagement correspondant au déverrouillage pour l'introduction de la rotule.

4. Embout verrouillable selon la revendication 1, caractérisé en ce que la tête (2) et l'organe poussoir (4) présentent en combinaison des moyens complémentaires de guidage et d'indexation ;

5. Embout verrouillable selon la revendication 1, caractérisé en ce que l'organe (4) présente au niveau de l'extrémité ouverte des pattes un bourrelet de retenue (4c) coopérant avec le bord circulaire de la tête (2) en position de verrouillage.

6. Embout verrouillable selon la revendication 1, caractérisé en ce que le moyen élastique (5) est un ressort monté dans le fond de l'organe poussoir (4) en appui sur la tête (2).

7. Embout verrouillable selon la revendication 1, caractérisé en ce que la tête (2) est réalisée à partir d'un corps cylindrique.

8. Embout verrouillable selon la revendication 1, caractérisé en ce que la tête (2) est montée concentriquement dans une bague élastique (6) filtrante elle-même solidaire d'une douille (7) en matériau rigide.
